# FASCICULE DE BREVET EUROPEEN

(11) **EP 3 221 624 B1**
(45) Date de publication et mention de la délivrance du brevet: **09.01.2019**
(21) Numéro de dépôt: 15798038.4
(22) Date de dépôt: 19.11.2015
(51) Int. Cl.: F16L 11/02, B29L 23/00, B29K 309/08, B29K 75/00, B29D 23/00, F16L 11/18, F16L 11/127, F16L 11/10, B64D 13/00, B29K 83/00, F24F 13/02

(54) **TUYAUTERIE D'AIR "FLEX-RIGIDE"**
»FLEXIBEL-STARRES LUFTROHR
"FLEXIBLE-RIGID" AIR PIPE

(30) Priorité: 21.11.2014 FR 1461288
(43) Date de publication de la demande: 27.09.2017
(73) Titulaire: AIRBUS (SAS), 31700 Blagnac (FR)
(72) Inventeur: DANTIN, Benoît, F-95170 Deuil la Barre (FR)
(74) Mandataire: Gicquel, Olivier Yves Gérard
(86) Numéro de dépôt international: PCT/EP2015/077064
(87) Numéro de publication internationale: WO 2016/079226

(56) Documents cités:
- EP-A1- 1 589 270
- EP-A1- 2 339 217
- WO-A1-2012/032397
- GB-A- 2 442 856

## Description

### DOMAINE DE L'INVENTION

L'invention se rapporte au domaine général du conditionnement d'air dans les aéronefs et concerne plus particulièrement la mise en place sur la structure de l'aéronef des tuyauteries destinée à la circulation de l'air.

L'invention se rapporte également aux problèmes de mise en place sur la structure d'un aéronef des différents torons constituant le câblage électrique.

### CONTEXTE DE L'INVENTION - ART ANTERIEUR

En ce qui concerne les aéronefs actuellement en service ou en cours d'assemblage, la mise en place des gaines de conditionnement d'air qui traversent l'aéronef ainsi que la mise en place des torons qui assurent les interconnexions électriques entre les différents équipements électriques dans l'aéronef constitue une étape délicate de l'assemblage d'un aéronef.

La circulation d'air dans les aéronefs est généralement réalisée par des tuyauteries rigides en composite de fibres de verre et de résine phénolique, connectées entre elles par des manchons de raccordement.

Pour des raisons évidentes de poids, ces tuyauteries sont de structure très légère, fragile, ce qui rend leur mise en place particulièrement délicate et coûteuse en temps d'installation. Par ailleurs leur fragilité intrinsèque les rend vulnérables et occasionne de fréquents remplacements, notamment au moment des opérations d'assemblage et de maintenance de l'aéronef.

Ces tuyauteries sont par ailleurs attachées à la structure par l'intermédiaire de supports fixés sur des éléments de structure (structure primaire, habillage...) la mise en place des supports (préparation de surface, collage/rivetage des supports, cycle de séchage....) étant elle-même consommatrice de temps.

L'interconnexion électrique entre équipements est, quant à elle, actuellement réalisée au moyen de câbles électriques. Ces câbles permettent par exemple la transmission de courants de forte intensité, de courants fonctionnels de plus faible intensité, ou de signaux électriques de communication, ainsi que la mise à la masse des différents équipements.

Ces câbles sont également attachés à la structure par l'intermédiaire de supports fixés sur des éléments de structure (structure primaire, habillage...).

La mise en place de l'interconnexion est par ailleurs généralement réalisée en utilisant des torons de câbles pré-réalisés, de dimensions déterminées, difficilement reconfigurables.

Comme dans le cas des canalisations d'air, la mise en place des supports (préparation de surface, collage/rivetage des supports, cycle de séchage....) de l'interconnexion électrique est elle-même consommatrice de temps.

En outre l'espacement des supports fait que les liaisons électriques formant l'interconnexion offre de la laxité aux câblages, de sorte qu'une distance de ségrégation entre deux liaisons voisines est imposée par les règles d'installation des systèmes de façon à ce que deux liaisons électriques voisines ne puissent pas entrer en contact l'une de l'autre du fait de la laxité de ces liaisons entre deux attaches.

Par suite, l'obligation de respecter des distances de ségrégation entre différents conducteurs fait que la mise en place d'une interconnexion conforme aux règles en vigueur en l'espèce, requiert un volume de déploiement important, difficilement compatible avec les architectures des aéronefs actuels, lesquels embarquent de plus en plus de systèmes dans des espaces techniques de plus en plus réduits.

Ainsi la nécessité de raccourcir les temps d'installation des différents équipements lors de l'assemblage d'un aéronef et de rendre la mise en place des moyens de liaison électrique et de transport d'air compatible des contraintes de masse et d'encombrement fait naitre le besoin de repenser en profondeur la structure de ces moyens.
EP 1 589 270 A1 est état de la technique et divulgue un conduit apte à former des canalisations de circulation d'air dans une structure, comportant un tube flexible en matériau composite dont la matrice est une résine qui demeure souple après polymérisation, la paroi du tube est rigidifiée au moyen d'éléments structuraux, ou gaine rigide, réalisés dans un matériau composite dont la matrice est une résine qui se rigidifie après polymérisation, lesdits éléments de la gaine rigide étant configurés et agencés à la surface du tube.

### PRESENTATION DE L'INVENTION

Un but de l'invention est de proposer une solution simple et efficace au problème exposé précédemment.

A cet effet l'invention a pour objet un conduit pour former des canalisations de circulation d'air dans une structure. Le conduit selon l'invention comporte un tube flexible en matériau composite dont la matrice est une résine qui demeure souple après polymérisation. Ledit tube présente sur sa longueur des sections pour lesquelles la paroi du tube est rigidifiée au moyen d'éléments structuraux réalisés dans un matériau composite dont la matrice est une résine qui se rigidifie après polymérisation. Lesdits éléments structuraux sont configurés et agencés à la surface du tube de façon à former une ossature en treillis entourant la paroi du tube.

Selon différentes dispositions pouvant être combinées les unes aux autres le dispositif selon l'invention présente également diverses caractéristiques complémentaires. Ainsi:
Selon une disposition particulière, la matrice formant le matériau composite constituant le tube est une résine polyuréthane ou une résine silicone.

Selon une disposition particulière, la matrice formant le matériau composite constituant les éléments structuraux est une résine acrylique.

Selon une disposition particulière, l'ossature en treillis en matériau composite rigide constituant les sections rigides du conduit est formée d'anneaux reliés les uns aux autres par des longerons disposés tout autour de la paroi du tube.

Selon une disposition particulière, le conduit selon l'invention comporte en outre des éléments structuraux en forme d'anneaux, en matériau composite rigide, disposés aux extrémités du conduit.

Selon une disposition particulière, le conduit selon l'invention comporte en outre des conducteurs électriques disposés longitudinalement sur la paroi du conduit, lesdits conducteurs électriques présentant un parcours rectiligne au niveau des sections rigidifiées du conduit et un parcours présentant des sinuosités au niveau de certaines des sections du conduit non rigidifiées.

Selon une disposition particulière, lesdits conducteurs électriques présentent un parcours présentant des sinuosités au niveau des sections du conduit non rigidifiées situées aux extrémités dudit conduit.

Selon une disposition particulière, lesdits conducteurs électriques sont intégrés à la paroi du conduit avant polymérisation des résines.

Selon une disposition particulière, lesdits conducteurs électriques sont fixés à la paroi du conduit au moyen d'un adhésif.

L'invention permet avantageusement la réalisation de longues tuyauteries, comportant des parties rigides pouvant être rapidement mises en place et fixées à la structure et des parties souples permettant une installation et un démontage plus aisés.

Par ailleurs la possibilité de réaliser d'un seul tenant des canalisations de grandes longueurs pouvant porter des liaisons électriques permet avantageusement de réaliser des liaisons électriques de grandes longueurs présentant un minimum de zones de connexion. Ces zones sont de nature à pénaliser le comportement fonctionnel des systèmes électriques par ajout de résistances de contact et baisse de la fiabilité de la liaison dans son ensemble.

### DESCRIPTION DES FIGURES

Les caractéristiques et avantages de l'invention seront mieux appréciés grâce à la description qui suit, description qui s'appuie sur les figures annexées qui présentent:
- la figure 1, une vue schématique globale présentant la structure d'un conduit selon l'invention ;
- la figure 2, une vue schématique globale d'un conduit selon l'invention équipé d'éléments conducteurs;
- la figure 3, une vue schématique partielle du conduit selon l'invention présenté sur la figure 3;
- la figure 4, une vue schématique partielle du conduit selon l'invention présenté sur la figure 3, l'extrémité de l'élément de conduit étant pliée;
- la figure 5, une vue schématique partielle d'un conduit 10a selon l'invention présenté sur la figure 3, ladite extrémité étant raccordée à un autre conduit 10b.

### DESCRIPTION DETAILLEE

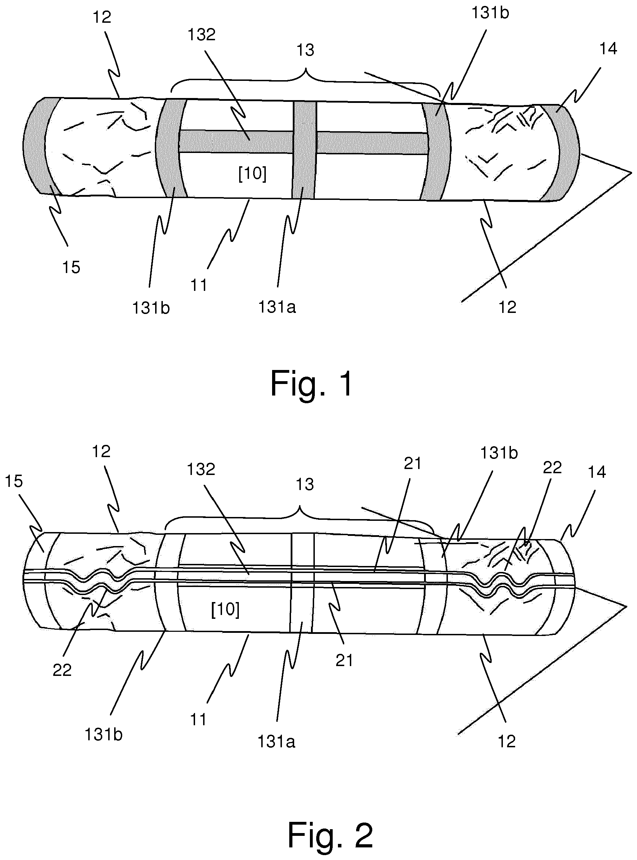

La suite de la description présente l'invention au travers d'un exemple de réalisation illustré par les figures 1 à 5 associées. Cet exemple qui a simplement pour objet de mettre en évidences les caractéristiques de l'invention, n'est bien entendu nullement limitatif de la portée ou de l'étendue de cette dernière.

Comme l'illustre la figure 1, le dispositif selon l'invention consiste principalement en un conduit 10, un conduit de conditionnement d'air destiné à être logé dans une structure d'aéronef par exemple, présentant une alternance de sections de conduit rigides 11 séparées les unes des autres par des sections de conduit souples 12.

Les longueurs respectives des sections rigides 11 et souples 12 dépendent essentiellement de l'usage du conduit considéré et des conditions de mise en place de ce conduit.

Selon l'invention, cette structure dite "Flex-rigide" est obtenue en réalisant un conduit en matériau composite formé d'un tissu de renfort imprégné d'une résine ayant la propriété de rester souple après polymérisation.

Dans un mode de réalisation particulier pris comme exemple non limitatif, la résine utilisée est une résine polyuréthane.

Le conduit souple 10 ainsi obtenu est par ailleurs rigidifié sur certaines sections par des élément structuraux 13, chaque élément étant constitué d'anneaux 131a et 131b en matériau composites à matrice rigide, disposés le long du conduit 10 et reliés entre eux par des longerons 132, réalisés en matériau composite à matrice rigide également, et disposés tout autour de la paroi du conduit 10, de manière de préférence régulière.

L'ensemble constitué par les anneaux 131a et 131b reliés les uns aux autres par des longerons 132 forme une ossature 13 ayant l'aspect d'un cadre ou d'un treillis entourant certains tronçons du conduit 10, la partie centrale notamment, et rendant ces tronçons incapables de flexion.

Le conduit 10 selon l'invention peut ainsi être constitué d'une succession de parties rigides 13 et de parties souples 12 telles que celles illustrées par la figure 1.

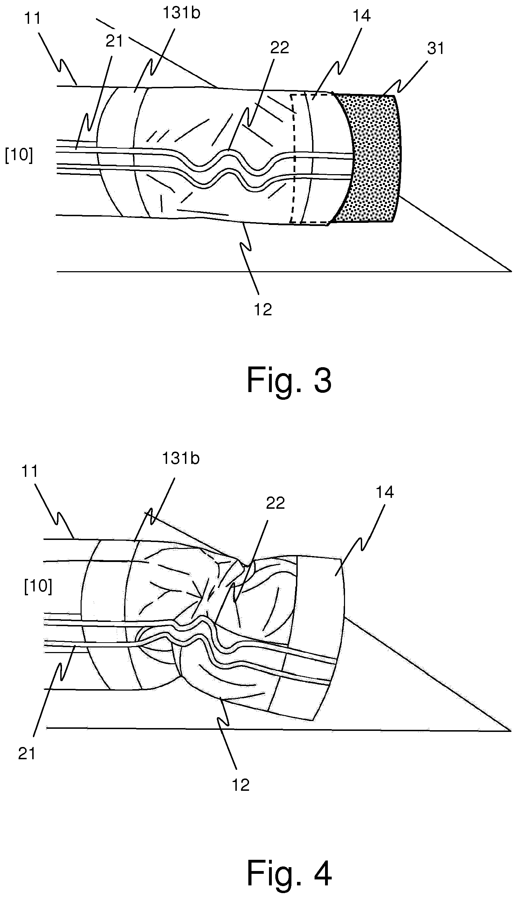

Le conduit 10 ainsi obtenu est également rigidifié à ses extrémités par des éléments terminaux 14, 15 en forme d'anneaux réalisés en matériau composite à matrice rigide, semblable aux anneaux 131a et 131b constituant la structure rigide 13. Ces anneaux, de largeurs déterminées, ont pour fonction de faciliter le raccordement de deux conduits, en permettant par exemple d'insérer facilement un tube de raccord rigide 31 à l'extrémité de chacun des conduits comme illustré par la figure 3.

Selon que la section terminale du conduit considéré est maintenue souple ou rigidifiée, un anneau d'extrémité peut être placé à l'extrémité d'une section du conduit 10 maintenue souple, comme illustré sur les figures 1 à 3, ou constituer l'anneau d'extrémité 131b d'une section rigide.

De manière optionnelle, le conduit 10 peut également comporter des structures intermédiaires 14 et 15 en forme d'anneaux réalisées en matériau composite à matrice rigide, semblables aux anneaux 131a et 131b constituant la structure rigide 13 mais sans lien rigide entre elles ou avec cette dernière. Ces anneaux rigides intermédiaires 14 et 15 peuvent notamment faciliter la liaison entre deux conduits présentant des terminaisons souples de sections de conduit maintenues souples.

Le conduit de structure "Flex-rigide" selon l'invention peut être réalisé en matériau composite de différentes façons connues et non exposées ici.

Pour la fabrication de conduits "flex-rigides", on peut par exemple utiliser un tissu en fibre de verre tissé en grosses mailles et une résine restant souple après polymérisation (polyuréthane, silicone...) pour les parties flexibles, et un tissu de verre standard avec une résine rigide après polymérisation, une résine époxy par exemple.

Cependant dans une forme de réalisation préférée, le conduit 10 selon l'invention est réalisé en une seule opération qui consiste à former un tube à partir d'un tissus en fibre de verre imprégné d'une résine élastique et à constituer l'ossature rigide sur la paroi externe du tube ainsi formé en appliquant à la surface externe du tube des bandes de tissus imprégnées d'une matrice rigide, les bandes de tissu imprégnées étant agencées pour constituer les anneaux 131a et 131b et les longerons 132 formant un élément d'ossature 13 ou les anneaux d'extrémité 14 et 15 du conduit.

L'ensemble ainsi constitué est alors polymérisé en une seule opération, de sorte que le conduit 10 obtenu forme un objet monolithique, c'est-à-dire sans élément rapporté après fabrication, par collage ou toute autre technique connue.

Selon cette forme de réalisation préférée, la résine époxy utilisée pour former les éléments d'ossature 13 est choisie de façon à ce que sa polymérisation se produise dans les mêmes conditions que celles du polyuréthane utilisé pour réaliser le conduit 10.

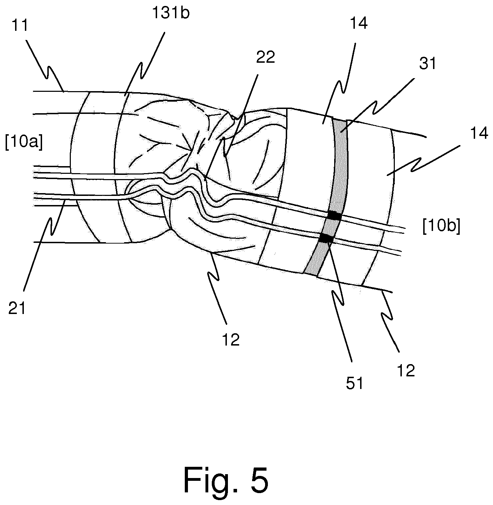

Avantageusement, comme l'illustrent les figures 4 et 5, cette structure "Flex-rigide" permet de disposer d'un conduit unique qui présente des sections rectilignes rigides 11 et des sections souples 12, capables de se déformer sans dommage, permettant de réaliser d'une pièce des conduits 10 de grande longueur (de plusieurs mètres) faciles à mettre en place à l'intérieur de la structure à laquelle il sont destinés.

Les parties rigides 11 permettent une manipulation aisée du conduit 10 considéré, l'installation dudit conduit sur la structure et le raccordement facile de différents conduits formant une canalisation.

Les parties flexibles 12, quant à elles, facilitent le montage et le démontage de conduites dans des environnements encombrés et la reprise des variations géométriques d'assemblage des structures sur lesquelles elles sont installées. Elles permettent notamment au conduit 10 considéré de présenter des coudes pour suivre le cheminement voulu. Les coudes sont ainsi réalisés sans nécessiter l'interruption du conduit ni la mise en place d'un élément rigide coudé. On peut ainsi réaliser, avec un minimum de jonctions 31, des canalisations de grandes longueurs présentant à la fois des portions rectilignes et des portions coudées.

Dans une forme de réalisation particulière, illustrée par les figures 2 à 5, le conduit 10 selon l'invention peut être équipé de conducteurs électriques 21 (câbles, tresses...) disposés de façon à courir longitudinalement le long du conduit 10. A cet effet, lesdits conducteurs 21 peuvent être directement collés sur la surface du conduit 10 après fabrication de ce dernier.

Alternativement, ils peuvent être intégrés, avant polymérisation, dans la matrice imprégnant le matériau composite de sorte qu'après polymérisation ils font partie intégrante de la paroi du conduit 10. Les conducteurs 21 sont préférentiellement disposés de façon à passer sur les longerons 132 constituant chacune des ossatures 13 formant les sections rigides 11 du conduit 10.

Selon l'invention, les conducteurs 21 sont agencés sur le conduit 10 de façon à ne pas entraver la capacité de déformation dont dispose le conduit 10 au niveau des sections 12 maintenues souples. A cet effet, ils adoptent dans ces zones un parcours ondulé 22, comme illustré sur les figures 2 et 3. Ce parcours ondulé rend avantageusement possible une déformation du profil rectiligne du conduit 10 au niveau des sections flexibles 12, comme illustré par les figures 4 et 5, sans que les conducteurs 21 se rompent ou qu'ils s'arrachent de la surface du conduit 10 endommageant par là même la paroi de ce dernier. On peut ainsi avantageusement relier deux conduits 10a et 10b orientés suivant des directions différentes, comme illustré par la figure 5, au moyen d'un simple manchon de raccordement rectiligne 31.

Il est à noter que du fait du plus faible nombre de jonctions nécessaires pour former une canalisation de longueur donnée, le cheminement de liaisons électriques le long de la canalisation considérée nécessite un nombre plus faible de dispositifs de connexions 51 de sorte que les pertes électriques (par effet joule lié à la résistance électrique notamment) engendrées par les connexions sont plus faibles et que les risques de rupture de ces liaisons électriques par interruption de ces connexions sont moindres.

L'utilisation de conduits "Flex-rigides" selon l'invention procure ainsi plusieurs avantages:
- Elle permet l'installation groupée des conduites d'air et de réseaux électriques, ce qui entraine une diminution de la charge de travail des opérateurs chargés de l'installation de ces équipements et du temps de cycle nécessaire pour l'installation des systèmes électriques (suppression de la mise en place des supports des liaisons électriques).
- Elle rend possible un accroissement de la compacité des liaisons électriques, les éléments conducteurs étant directement intégrés à la surface des canalisations d'air (pas de distances de ségrégation à respecter) ;
- Elle induit une réduction de la masse des liaisons électriques par la suppression des supports nécessaires à son maintien dans l'aéronef ;
- elle introduit une certaine tolérance aux dommages des conduites d'air qui peuvent maintenant se déformer en cas d'impact, lié à une chute d'outil par exemple, au lieu de se détériorer. La flexibilité des conduits "Flex-rigides" rendant ces derniers plus robustes, leur utilisation entraine donc avantageusement une réduction des coûts de maintenance.

## Revendications

1. Conduit, pour former des canalisations de circulation d'air dans une structure, qui comporte un tube flexible (10) en matériau composite dont la matrice est une résine qui demeure souple après polymérisation ledit tube présentant sur sa longueur des sections (11) pour lesquelles la paroi du tube est rigidifiée au moyen d'éléments structuraux (13) réalisés dans un matériau composite dont la matrice est une résine qui se rigidifie après polymérisation, lesdits éléments structuraux (13) étant configurés et agencés à la surface du tube de façon à former une ossature en treillis entourant la paroi du tube (10).

2. Conduit selon la revendication 1, **caractérisé en ce que** la matrice formant le matériau composite constituant le tube (10) est une résine polyuréthane ou une résine silicone.

3. Conduit selon l'une des revendications 1 ou 2, **caractérisé en ce que** la matrice formant le matériau composite constituant les éléments structuraux (13) est une résine acrylique.

4. Conduit selon l'une quelconque des revendications 1 à 3, **caractérisé en ce que** l'ossature (13) en treillis en matériau composite rigide constituant les sections rigides du conduit est formée d'anneaux reliés les uns aux autres par des longerons disposés tout autour de la paroi du tube (10).

5. Conduit selon l'une quelconque des revendications précédentes, **caractérisé en ce qu'**il comporte en outre des éléments structuraux en forme d'anneaux (14, 15), en matériau composite rigide, disposés aux extrémités du conduit.

6. Conduit selon l'une quelconque des revendications précédentes, **caractérisé en ce qu'**il comporte en outre des conducteurs électriques (21, 22) disposés longitudinalement sur la paroi du conduit, lesdits conducteurs électriques présentant un parcours rectiligne (21) au niveau des sections rigidifiées (11) du conduit et un parcours présentant des sinuosités (22) au niveau de certaines des sections du conduit non rigidifiées (12).

7. Conduit selon la revendication 6, **caractérisé en ce que** lesdits conducteurs électriques présentent un parcours présentant des sinuosités (22) au niveau des sections du conduit non rigidifiées (12) situées aux extrémités dudit conduit.

8. Conduit selon l'une quelconque des revendications 6 ou 7, **caractérisé en ce que** lesdits conducteurs électriques (21, 22) sont intégrés à la paroi du conduit avant polymérisation des résines.

9. Conduit selon l'une quelconque des revendications 6 ou 7, **caractérisé en ce que** lesdits conducteurs électriques (21, 22) sont fixés à la paroi du conduit au moyen d'un adhésif.

## Patentansprüche

1. Leitungsrohr zum Herstellen von Rohrleitungen zur Luftzirkulation in einer Struktur, welches ein flexibles Rohr (10) aus einem Verbundwerkstoff aufweist, dessen Matrix ein Harz ist, welches nach Polymerisation weich bleibt, wobei dieses Rohr auf seiner Länge Abschnitte (11) aufweist, für welche die Wand des Rohres mithilfe von Strukturelementen (13) versteift ist, die aus einem Verbundwerkstoff hergestellt sind, dessen Matrix ein Harz ist, welches nach Polymerisation aushärtet, wobei die Strukturelemente (13) auf der Oberfläche des Rohres so ausgebildet und angeordnet sind, dass sie ein gitterförmiges Gerüst bilden, das die Wand des Rohres (10) umgibt.

2. Leitungsrohr nach Anspruch 1, **dadurch gekennzeichnet, dass** die Matrix, die den Verbundwerkstoff bildet, aus dem das Rohr (10) besteht, ein Polyurethanharz oder ein Silikonharz ist.

3. Leitungsrohr nach einem der Ansprüche 1 oder 2, **dadurch gekennzeichnet, dass** die Matrix, die den Verbundwerkstoff bildet, aus dem die Strukturelemente (13) bestehen, ein Acrylharz ist.

4. Leitungsrohr nach einem der Ansprüche 1 bis 3, **dadurch gekennzeichnet, dass** das gitterförmige Gerüst (13) aus starrem Verbundwerkstoff, das die starren Abschnitte des Leitungsrohres bildet, von durch Holme miteinander verbundenen Ringen gebildet wird, die überall um die Wand des Rohres (10) herum angeordnet sind.

5. Leitungsrohr nach einem der vorhergehenden Ansprüche, **dadurch gekennzeichnet, dass** es außerdem ringförmige Strukturelemente (14, 15) aus starrem Verbundwerkstoff aufweist, die an den Enden des Leitungsrohres angeordnet sind.

6. Leitungsrohr nach einem der vorhergehenden Ansprüche, **dadurch gekennzeichnet, dass** es außerdem elektrische Leiter (21, 22) aufweist, die an der Wand des Leitungsrohres in Längsrichtung angeordnet sind, wobei die elektrischen Leiter einen geradlinigen Verlauf (21) an den versteiften Abschnitten (11) des Leitungsrohres und einen Biegungen aufweisenden Verlauf (22) an einigen der nicht versteiften Abschnitte (12) aufweisen.

7. Leitungsrohr nach Anspruch 6, **dadurch gekennzeichnet, dass** die elektrischen Leiter einen Biegungen aufweisenden Verlauf (22) an den nicht versteiften Abschnitten (12) des Leitungsrohres aufweisen, die sich an den Enden des Leitungsrohres befinden.

8. Leitungsrohr nach einem der Ansprüche 6 oder 7, **dadurch gekennzeichnet, dass** die elektrischen Leiter (21, 22) vor der Polymerisation der Harze in die Wand des Leitungsrohres integriert werden.

9. Leitungsrohr nach einem der Ansprüche 6 oder 7, **dadurch gekennzeichnet, dass** die elektrischen Leiter (21, 22) mittels eines Klebstoffs an der Wand des Leitungsrohres befestigt sind.

## Claims

1. Pipe for forming air flow pipelines in a structure, which comprises a flexible tube (10) made from composite material, the matrix thereof being a resin which remains flexible after polymerization, said tube having, on the length of same, sections (11) for which the wall of the tube is stiffened by means of structural elements (13) made from a composite material, the matrix thereof being a resin which is stiffened after polymerization, said structural elements (13) being configured and arranged on the surface of the tube in such a way as to form a lattice framework surrounding the wall of the tube (10).

2. Pipe according to Claim 1, **characterized in that** the matrix forming the composite material which constitutes the tube (10) is a polyurethane resin or silicone resin.

3. Pipe according to either one of Claims 1 and 2, **characterized in that** the matrix forming the composite material which constitutes the structural elements (13) is an acrylic resin.

4. Pipe according to any one of Claims 1 to 3, **characterized in that** the lattice framework (13) made of rigid composite material which constitutes the rigid sections of the pipe is formed from rings connected to one another by longitudinal members arranged all around the wall of the tube (10).

5. Pipe according to any one of the preceding claims, **characterized in that** it further comprises structural elements in the form of rings (14, 15), made of rigid composite material, arranged at the ends of the pipe.

6. Pipe according to any one of the preceding claims, **characterized in that** it further comprises electrical conductors (21, 22) disposed longitudinally on the wall of the pipe, said electrical conductors having a straight path (21) in the region of the stiffened sections (11) of the pipe and a meandering path (22) in the region of certain of the non-stiffened sections of the pipe (12).

7. Pipe according to Claim 6, **characterized in that** said electrical conductors have a meandering path (22) in the region of the non-stiffened sections of the pipe (12) located at the ends of said pipe.

8. Pipe according to either one of Claims 6 and 7, **characterized in that** said electrical conductors (21, 22) are integrated in the wall of the pipe before the polymerization of the resins.

9. Pipe according to either one of Claims 6 and 7, **characterized in that** said electrical conductors (21, 22) are fixed to the wall of the pipe by means of an adhesive.
